# EUROPÄISCHE PATENTANMELDUNG

(11) **EP 4 806 725 A1**
(43) Veröffentlichungstag der Anmeldung: **16.09.2026**
(21) Anmeldenummer: 26154420.9
(22) Anmeldetag: 27.01.2026
(51) Int. Cl.: B60R 5/00, B60P 7/08, F16B 5/02

(54) **EINRICHTUNGSANBINDUNG**

(30) Priorität: 12.03.2025 DE 102025109441
(71) Anmelder: Sortimo International GmbH, 86441 Zusmarshausen (DE)
(72) Erfinder: Höchstötter, Bernhard, 89438 Holzheim (DE)
(74) Vertreter: Charrier Rapp & Liebau

(57) **Zusammenfassung**

Die vorliegende Erfindung betrifft eine Einrichtungsanbindung mit einem Blech (1), dessen Länge in Längsrichtung (L) mindestens dessen dreifache Breite in Querrichtung (Q) beträgt. An mindestens einem ersten in Längsrichtung (L) angeordneten Ende (2) des Blechs (1) ist eine gekrümmte erste Vertiefung (3) angeordnet, durch welche sich ein erster Schlitz (4) erstreckt.

## Beschreibung

Die Erfindung betrifft eine Einrichtungsanbindung nach dem Oberbegriff des Anspruchs 1.

Unter einer Einrichtungsanbindung ist eine Vorrichtung zu verstehen, mit der ein Einrichtungsgegenstand, z. B. ein Schrank oder ein Regal, mit einer Seitenwand eines Innenraums verbunden wird. Dies ist insbesondere in Transportfahrzeugen relevant, welche mit Einrichtungen zum Lagern von Werkzeugen und Materialien ausgestattet sind, die fest mit der Fahrzeuginnenseite verbunden sein müssen, um während des Betriebs des Fahrzeugs und auch bei Unfällen eine sichere Halterung der Einrichtungsgegenstände in dem Fahrzeug zu gewährleisten und zu verhindern, dass sich diese z. B. bei Fahrten auf unebenen Fahrbahnen, bei schnellem Bremsen oder Beschleunigen, bei zügigen Kurvenfahrten oder bei Unfällen lösen, umfallen und den Fahrzeuginnenraum oder die Insassen beschädigen bzw. verletzen können. Insbesondere bei hohen Einrichtungen, z. B. Schränken und Regalen, ist es wichtig, diese nicht nur im Bodenbereich des Fahrzeugs zu verankern, sondern auch im Wandbereich, also an der seitlichen Innenwand des Fahrzeugs.

Entsprechende Anbindungen sind bekannt. So zeigt die DE 10 2013 108 807 B4 eine Befestigungsvorrichtung für Fahrzeugeinrichtungen zur lösbaren Befestigung an einer gegenüberliegenden, in einem Fahrzeug befestigten Schiene, wobei die Befestigungsvorrichtung ein erstes, an der Schiene befestigbares Befestigungsmittel und ein zweites, an der Fahrzeugeinrichtung befestigbares Befestigungsmittel aufweist, die über einen Schwenkarm miteinander verbunden sind, wobei auch ein drittes, an der Schiene oder der Fahrzeugeinrichtung befestigbares Befestigungsmittel vorhanden ist, ebenso wie ein Stützarm, der das dritte Befestigungsmittel mit dem jeweils gegenüberliegenden Befestigungsmittel verbindet. Hierdurch wird eine relativ einfache Montage und eine stabile Befestigung einer Fahrzeugeinrichtung in einem Fahrzeug ermöglicht.

Die in der genannten Druckschrift gezeigte Befestigungsvorrichtung ist jedoch auf Verhältnisse ausgelegt, bei denen die Fahrzeugeinrichtung und die Fahrzeugwand in bestimmten Winkeln zueinander stehen, insbesondere in einem 90°-Winkel, da die Metallelemente, also die Schiene und der Stützarm, entsprechend vorgeformt sind und die durch ihre Bohrungen hindurchtretenden Schrauben nur in einem bestimmten Winkel geführt werden können. Die bekannte Befestigungsvorrichtung ist somit nicht universell einsetzbar, insbesondere wenn sich an der Fahrzeugeinrichtung oder der Fahrzeugwand Schrägen befinden, an denen die Befestigung vorzunehmen ist.

Die EP 2 730 457 A1 zeigt eine Halterung bzw. Einrichtungsanbindung mit einem Blech, dessen Länge in Längsrichtung großer ist als die dreifache Breite in Querrichtung, wobei das Blech an einem ersten in Längsrichtung angeordneten Ende eine gekrümmte Vertiefung aufweist, durch welche sich ein Schlitz erstreckt. Nachteilig ist hier die wenig universelle Einsatzmöglichkeit der Halterung.

Es besteht daher die Aufgabe, eine Einrichtungsanbindung so weiterzubilden, dass sie möglichst universell einsetzbar ist, ohne dass für jeden Fahrzeugtyp und jede Einrichtungssituation eine eigene Anbindung konstruiert und gefertigt werden muss.

Gelöst wird diese Aufgabe mit den kennzeichnenden Merkmalen des Anspruchs 1. Vorteilhafte Ausgestaltungen und eine Verwendung sind den Unteransprüchen entnehmbar.

So weist die erfindungsgemäße Einrichtungsanbindung ein Blech auf, dessen Länge in Längsrichtung mindestens dessen dreifacher Breite in Querrichtung beträgt, wobei an mindestens einem ersten, in Längsrichtung angeordneten Ende des Blechs eine gekrümmte Vertiefung angeordnet ist, durch welche sich ein Schlitz erstreckt, wobei die Vertiefung um eine in Querrichtung und Längsrichtung verlaufende Achse angeordnet und somit löffelförmig ausgebildet ist. Aufgrund der beidseitigen Krümmung dieser Vertiefung lässt sich eine Schraube in einem breiten, der Länge des Schlitzes entsprechenden Winkelbereich durch den Schlitz stecken und mit einer gegenüberliegenden Schraubenmutter verschrauben.

In einer vorteilhaften Ausgestaltung ist die Vertiefung um eine in Querrichtung verlaufende Achse angeordnet, wobei sich dann der Schlitz in Längsrichtung erstreckt. Alternativ hierzu kann die Vertiefung um eine in Längsrichtung verlaufende Achse angeordnet sein, wobei sich dann der Schlitz in Querrichtung erstreckt.

In einer bevorzugten Ausführungsform befindet sich nicht nur an dem ersten Ende des Blechs eine entsprechend gekrümmte Vertiefung, sondern auch an dem gegenüberliegenden zweiten Ende, welche ebenfalls einen Schlitz aufweist. Damit ergeben sich die Vorteile der winkelunabhängigen Befestigung an beiden Enden der Einrichtungsanbindung.

Möglich ist es, die an dem anderen Ende des Blechs angeordnete Vertiefung in einer gegenläufigen Richtung auszubilden, also in die andere Raumrichtung als die erste Vertiefung. Sie kann jedoch in einer alternativen Ausgestaltung auch in die gleiche Richtung zeigen.

In einer bevorzugten Ausführungsform weist das Blech in seinem zwischen den Enden liegenden Mittelbereich mindestens ein rundes oder längliches Loch, einerseits zur Materialeinsparung, andererseits als zusätzliche Befestigungsmöglichkeit für weitere Stützen und Anbindungen oder eine (nicht dargestellte) Abdeckkappe auf.

Bevorzugt besteht die Einrichtungsanbindung nicht nur aus dem beschriebenen Blech, sondern auch aus den die Schlitze durchdringenden Schrauben und entsprechenden Schraubenmuttern zur Befestigung des Blechs an der Fahrzeugeinrichtung und der Fahrzeuginnenwand.

Schließlich ist Gegenstand der Erfindung die Verwendung einer derartigen Einrichtungsanbindung zur Befestigung einer Einrichtung innerhalb eines Kraftfahrzeugs.

Ein Ausführungsbeispiel der Erfindung wird im Folgenden unter Bezugnahme auf die begleitenden Zeichnungen näher erläutert. Diese zeigen:
- **Fig. 1**: eine perspektivische Explosionsdarstellung einer erfindungsgemäßen Einrichtungsanbindung zusammen mit der Oberseite eines Regalpfostens;
- **Fig. 2**: die Anordnung gemäß Fig. 1 im zusammengebauten Zustand aus einer um ca.120° gedrehten Perspektive; und
- **Fig. 3**: die Einrichtungsanbindung gemäß Fig. 1 und Fig. 2 unter Darstellung zweier verschiedener Winkelpositionen der Befestigungsschrauben und ohne Löcher im Mittelbereich.

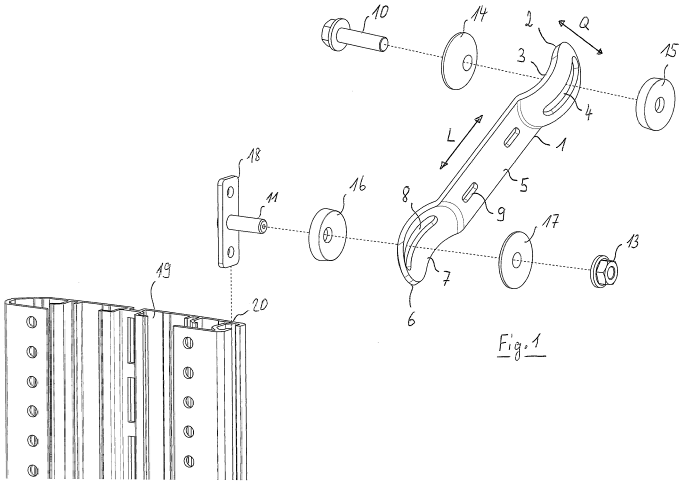

Figur 1 zeigt die wesentlichen Bauteile der erfindungsgemäßen Einrichtungsanbindung in Explosionsdarstellung. Zentrales Element der Einrichtungsanbindung ist ein Blech 1, welches vorzugsweise aus Metall, insbesondere aus Aluminium oder Stahl, bestehen kann, und dessen Länge in Längsrichtung L deutlich größer ist als dessen Breite in Querrichtung Q, mindestens um einen Faktor 3. Die Stärke des Blechs 1 ist gegenüber den Längs- und Querabmessungen gering und liegt typischerweise im Bereich 1 bis 4 mm. Das Blech 1 weist an seinem ersten Ende 2 und auch an seinem zweiten Ende 6 jeweils eine gekrümmte Vertiefung 3 bzw. 7 auf, wobei an dem ersten Ende 2 des Blechs 1 eine erste gekrümmte Vertiefung 3 und an dem zweiten Ende 6 des Blechs 1 eine zweite gekrümmte Vertiefung 7 angeordnet sind. Die Vertiefungen 3 und 7 sind im dargestellten Ausführungsbeispiel sowohl um eine in Querrichtung Q als auch um eine in Längsrichtung L verlaufende Achse gekrümmt angeordnet und somit löffelförmig ausgebildet. Ebenso sind die Vertiefungen 3 und 7 gegenläufig angeordnet, d. h. die erste Vertiefung 3, läuft bezogen auf die Fläche des Blechs 1, in eine Richtung und die zweite Vertiefung 7 in die entgegengesetzte Richtung, beide Vertiefungen 3 und 7 entstehen fertigungstechnisch aus einem rechteckigen Blech, welches in eine Gesenkform eingelegt wird, wobei die Vertiefungen 3 und 7 durch Pressen entstehen und wobei eine geringfügige Verringerung der Stärke des Blechs 1 im Bereich der Vertiefungen 3 und 7 in Kauf genommen wird.

Im Mittelbereich 5 des Blechs 1 befinden sich zwei Löcher 9, welche einerseits zusätzlichen Befestigungszwecken dienen können und andererseits eine Gewichtserleichterung des Blechs 1 zur Folge haben.

Jede der Vertiefungen 3 und 7 weist einen Schlitz 4 bzw. 8 auf, nämlich die erste Vertiefung 3 einen ersten Schlitz 4 und die zweite Vertiefung 7 einen zweiten Schlitz 8, wobei sich die Schlitze 4 und 8 in Längsrichtung L des Blechs 1 erstrecken. Da die Vertiefungen 3 und 7 gekrümmt ausgebildet sind, verlaufen auch die darin angeordneten Schlitze 4 bzw. 8 mit der gleichen Krümmung.

Zu der erfindungsgemäßen Einrichtungsanbindung gehören neben dem beschriebenen Blech 1 auch Standardbauteile, nämlich eine erste Schraube 10, welche eine erste Scheibe 14 durchtritt, bevor sie durch den ersten Schlitz 4 und eine sich daran anschließende zweite Scheibe 15 geführt wird, bis hin zu einer (nicht dargestellten) Schraubenmutter, in welche die erste Schraube 10 einschraubbar ist.

Ferner verläuft eine zweite Schraube 11 durch den zweiten Schlitz 8 der zweiten Vertiefung 7, wobei die zweite Schraube 11 an einer Nutenplatte 18 angeordnet ist, und, bevor sie durch den zweiten Schlitz 8 tritt, durch eine dritte Scheibe 16 läuft und nach Hindurchtreten durch den zweiten Schlitz 8 durch eine vierte Scheibe 17. Danach folgt eine Schraubenmutter 13, welche auf der Schraube 11 wirkt und darauf festgezogen werden kann.

Die mit der zweiten Schraube 11 verbundene Nutenplatte 18 ist von ihrer Form her geeignet, in der vertikal verlaufenden Nut 20 an der Seite eines Regalpfostens 19, der hier den zu fixierenden Einrichtungsgegenstand darstellt, geführt und in vertikaler Richtung verschoben zu werden.

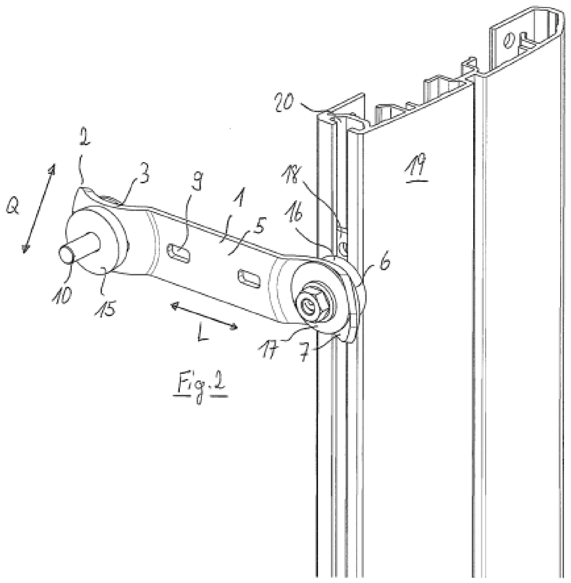

Die konkrete Einbausituation der in Figur 1 dargestellten Einrichtungsanbindung zeigt Figur 2, wobei hier der Regalpfosten 19 gegenüber der Darstellung in Figur 1 um etwa 120° gedreht ist. Wie Figur 2 zu entnehmen ist, befindet sich die Nutenplatte 18 innerhalb der Nut 20 des Regalpfostens 19. Die daran angebrachte zweite Schraube 11 durchtritt die dritte Scheibe 16 und anschließend die zweite Vertiefung 7 des Blechs 1, dann die vierte Scheibe 17 und greift dann in die Schraubenmutter 13 ein, welche auf der zweiten Schraube 11 festgezogen wird.

An der gegenüberliegenden Seite, also im Bereich des ersten Endes 2 und des Blechs 1 verläuft die erste Schraube 10 durch die erste Scheibe 14, den ersten Schlitz 4 des Blechs 1 und die zweite Scheibe 15, wobei die entsprechende Schraubenmutter hier nicht dargestellt ist. Diese wird auf der ersten Schraube 10 befestigt, sobald die Anbindung mit der Fahrzeuginnenseite hergestellt wurde, beispielsweise indem die erste Schraube 10 durch eine Bohrung in einem Innenblech der Fahrzeuginnenseite geführt worden ist.

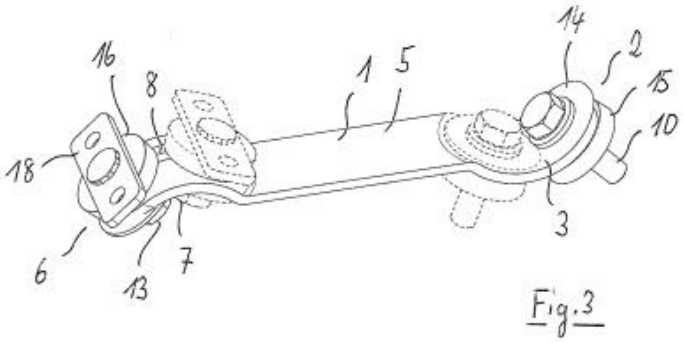

Fig. 3 veranschaulicht die Flexibilität der erfindungsgemäßen Einrichtungsanbindung dadurch, dass das (hier ohne Löcher 9 dargestellte) Blech 1 mit den Anordnungen aus erster Schraube 10, erster Scheibe 14, zweiter Scheibe 15 am ersten Ende 2 des Blechs 1 und zweiter Schraube 11 mit Nutenplatte 18, dritter Scheibe 16, vierter Scheibe 17 und Schraubenmutter 13 am zweiten Ende 6 des Blechs 1 jeweils in einer mit durchgezogenen Linien dargestellten Position und in einer mit gestrichelten Linien dargestellten Position gezeichnet sind. Man kann dieser Figur also entnehmen, dass sich die jeweiligen Schrauben 10 und 11 mit den weiteren, gegenüber dem Blech 1 beweglichen, darin angeordneten Bauteilen innerhalb der Schlitze 4 bzw. 8 verschieben lassen, so dass aufgrund der Anordnung der Schlitze 4 bzw. 8 in den gekrümmten Vertiefungen 3 bzw. 7 ein Richtungswechsel der Achsen der Schrauben 10 bzw. 11 um etwa 45° stattfinden kann. Dieser Figur ist also zu entnehmen, dass die erfindungsgemäße Einrichtungsanbindung an die verschiedensten geometrischen Gegebenheiten angepasst werden kann. Sofern beide Schrauben 10 und 11 jeweils etwa in der Mitte der Schlitze 4 bzw. 8 angeordnet sind, verlaufen deren Achsen parallel. Wenn die Schrauben 10 bzw. 11 innerhalb der Schlitze 4 bzw. 8 verschoben werden, ändert sich auch ihr Winkel, wie dies anhand des Vergleichs der Darstellungen mit durchgezogenen und gestrichelten Linien gut erkennbar ist. Auf diese Weise lassen sich sehr viele Anbindungsgeometrien mit der erfindungsgemäßen Einrichtungsanbindung realisieren, ohne dass für jede Einbausituation ein anderes Blech 1 verwendet werden müsste. Dadurch ergibt sich eine universelle Anwendbarkeit und eine geringere Notwendigkeit einer umfangreichen Lagerhaltung.

Bei allen Ausführungsformen können die Schlitze 4 bzw. 8 breiter ausgebildet sein, als der Durchmesser der Gewinde der Schrauben 10 bzw. 11, sodass auch eine seitliche Verkippung der Schrauben 10 bzw. 11 möglich ist, wodurch die Flexibilität noch weiter erhöht wird.

In nicht dargestellten alternativen Ausführungsformen ist es auch denkbar, die Vertiefungen 3 bzw. 7 nicht löffelförmig auszubilden, sondern nur um eine in Querrichtung Q verlaufende Achse gekrümmt, wobei sich dann der Schlitz in Längsrichtung L erstrecken würde oder - alternativ - die Vertiefungen 3 bzw. 7 um eine in Längsrichtung L verlaufende Achse anzuordnen, wobei dann der Schlitz in Querrichtung Q verlaufen würde. Diese Ausführungsformen würden ebenfalls eine hohe Flexibilität ermöglichen.

Bei den beschriebenen Schraubenmuttern kann es sich um normale Schraubenmuttern mit eingearbeiteten Scheiben handeln oder um sogenannte Einziehmuttern, welche fest mit der Karosserie verbunden werden.

### Bezugszeichenliste

- L: Längsrichtung
- Q: Querrichtung
- 1: Blech
- 2: erstes Ende
- 3: erste Vertiefung
- 4: erster Schlitz
- 5: Mittelbereich
- 6: zweites Ende
- 7: zweite Vertiefung
- 8: zweiter Schlitz
- 9: Loch
- 10: erste Schraube
- 11: zweite Schraube
- 13: Schraubenmutter
- 14: erste Scheibe
- 15: zweite Scheibe
- 16: dritte Scheibe
- 17: vierte Scheibe
- 18: Nutenplatte
- 19: Regalpfosten
- 20: Nut

## Patentansprüche

1. Einrichtungsanbindung mit einem Blech (1), dessen Länge in Längsrichtung (L) mindestens dessen dreifache Breite in Querrichtung (Q) beträgt, wobei an mindestens einem ersten in Längsrichtung (L) angeordneten Ende (2) des Blechs (1) eine gekrümmte erste Vertiefung (3) angeordnet ist, durch welche sich ein erster Schlitz (4) erstreckt **dadurch gekennzeichnet dass** die Vertiefung (3) um eine in Querrichtung (Q) und Längsrichtung (L) verlaufende Achse angeordnet und somit löffelförmig ausgebildet ist.

2. Einrichtungsanbindung nach Anspruch 1, **dadurch gekennzeichnet, dass** sich der erste Schlitz (4) in Längsrichtung (L) erstreckt.

3. Einrichtungsanbindung nach einem der voranstehenden Ansprüche, **dadurch gekennzeichnet, dass** auch an dem dem ersten Ende (2) gegenüberliegenden zweiten Ende (6) des Blechs (1) eine zweite Vertiefung (7) und ein zweiter Schlitz (8) nach einem der voranstehenden Ansprüche angeordnet sind.

4. Einrichtungsanbindung nach Anspruch 3, **dadurch gekennzeichnet, dass** die zweite Vertiefung (7) an dem zweiten Ende (6), bezogen auf die Vertiefung an dem ersten Ende (2) des Blechs in die andere Richtung, also gegenläufig ausgebildet ist.

5. Einrichtungsanbindung nach einem der voranstehenden Ansprüche, **dadurch gekennzeichnet, dass** das Blech (1) in seinem zwischen den Enden (2, 6) liegenden Mittelbereich (5) mindestens ein rundes oder längliches Loch (9) aufweist.

6. Einrichtungsanbindung nach einem der voranstehenden Ansprüche, **dadurch gekennzeichnet, dass** für den oder jeden Schlitz (4, 8) eine diesen durchdringende Schraube (10, 11) und eine Schraubenmutter (13) zur Befestigung des Blechs (1) vorgesehen ist.

7. Verwendung einer Einrichtungsanbindung nach einem der voranstehenden Ansprüche zur Befestigung eines Einrichtungsgegenstands innerhalb eines Kraftfahrzeugs.
